# EUROPEAN PATENT SPECIFICATION

(11) **EP 3 781 424 B1**
(45) Date of publication and mention of the grant of the patent: **08.05.2024**
(21) Application number: 18915680.5
(22) Date of filing: 22.10.2018
(51) Int. Cl.: B60J 10/00, B60J 10/32, B60J 10/40

(54) **PROFILE EMBODIMENT PROVIDING SEALING ON VEHICLE DOORS**
PROFILAUSFÜHRUNG ZUR ABDICHTUNG AUF FAHRZEUGTÜREN
MODE DE RÉALISATION DE PROFILÉ FOURNISSANT UNE ÉTANCHÉITÉ SUR DES PORTES DE VÉHICULE

(30) Priority: 19.04.2018 TR 201805573
(43) Date of publication of application: 24.02.2021
(73) Proprietor: Standard Profil Ege Otomotiv Sanayi Ve Ticaret Anonim Sirketi, Kagithane/Istanbul (TR)
(72) Inventor: YAMAN, Yusuf, Manisa (TR); SENER, Aydin, Manisa (TR)
(74) Representative: Yamankaradeniz, Kemal
(86) International application number: PCT/TR2018/050616
(87) International publication number: WO 2019/203742

(56) References cited:
- EP-A1- 2 594 421
- CN-U- 202 225 719
- DE-A1-102011 102 471
- DE-A1-102016 006 209
- DE-U1- 20 319 688
- GB-A- 2 421 268
- JP-A- 2002 059 746
- JP-A- 2011 084 136
- US-A- 4 417 419
- US-A- 4 483 113

## Description

### Technical Field

The invention relates to the embodiment of a sealing profile formed from trim and sealing profile in the vehicles produced in the automotive industry, located and operated in the gaps between the door and the body, or the window and the door.

The invention particularly relates to the sealing profile embodiment which ensures that the sealing profile is properly connected by means of the trim with an oval connection element.

### Prior Art

In order to isolate the vehicle produced in automotive industry today, from exterior factors such as water, air, sound and noise, sealing profile embodiments are used in the gaps between the door and the body, or the window and the door.

Sealing profile embodiments consists of a sealing profile placed on the gripping means formed at the vehicle door and the trim (also known as decorative trim, ornamental trim, protective trim, chrome trim or nickel-plating trim) placed on it.

Since there is more than one fastening system between the shiny or matted trim and the sealing profile used in the prior art, the fitting operation is difficult.

In the prior art, when the tolerance range of the protrusions above the trim is minimum, and the gaps of the sealing profile are maximum, the difficulty of fitting the trim and even the problem of not fitting it at all occurs.

In the prior art, when the tolerance range of the protrusions above the trim is maximum, and the gaps of the sealing profile are minimum, the problem of dislocation occurs after the trim is assembled.

In the prior art, breakages are observed during dismantling operations, resulting in extra cost.

As a result of the literature search, various structures related to the vehicle glass trims mentioned are encountered. One of them is a national patent application entitled "The vehicle side door trim made of stainless steel chrome on ABS plastic" with application number TR2014/04867. In the abstract of the invention classified as B60R 13/02, the expression as " This invention relates to the vehicle side door trim made of stainless steel chrome on ABS plastic. The invention relates to the vehicle side door trim assembly to the vehicles that do not have a side door trim on the factory exit and to the improvements made on this trim. " is made.

In this application, impact absorption was obtained by using plastic material on the surface of the trim. However, no progress has been made on the assembly of the trim.

In the patent search of prior art, the publication numbered EP2594421 (B1) was found. In this application, the connection element formed on the chrome trim has a flat structure and due to the presence of multiple connection protrusions, there are problems before and after installation. Therefore, this application can be cited as an example of many disadvantages mentioned above.

Documents GB 2 421 268 A and DE 10 2016 006209 further disclose sealing profiles with a trim placed on the sealing profile.

As a result, improvements are made in the trims in parallel with the developing technology, so new structures are needed to eliminate the disadvantages mentioned above and to bring solutions to the existing systems.

### The Purpose of Invention

The invention relates to the trims which, unlike the structures used in the prior art, have been developed to solve the disadvantages mentioned above and offer some additional advantages.

The purpose of the invention is to make the embodiment more stable due to the precise fitting of the oval connection member formed in the trim to the oval connection slot formed in the sealing profile.

Another purpose of the invention is, due to the first and second connecting surfaces, to fix the connecting member properly precise to make it more stable.

Another purpose of the invention is to reduce labour and provide ease of assembly in the processes of assembly and dismantling.

Another purpose of the invention is to eliminate extra costs by preventing breakages in dismantling operations.

In order to fulfill the objectives above, a sealing profile embodiment comprising the sealing profile to prevent water and dust penetration into the vehicle, which is mounted between the vehicle door and the glass, has been placed on the sealing profile mentioned, and, which has the trim that forms a durable structure, has been developed. The main body of said trim comprising a trim base covering the sealing profile. In the center of said trim base there is an oval connection element which is formed perpendicular to the the trim base to ensure that the trim is fully fitted in the sealing element. On the sealing profile mentioned, it comprises an oval connection slot where the oval connection member will be placed in accordance with the oval structure of the oval connection member.

The structural and characteristic features and all advantages of the invention outlined in the drawings below and in the detailed description made by referring these figures will be understood clearly. Therefore, the evaluation should be made considering these figures and detailed explanations.

### Brief Description of the Figures

- Figure-1: is the perspective view of the trim of the invention.
- Figure-2: is the two dimensional side view of the trim of the invention.
- Figure-3: is the two dimensional side view of the sealing member that the trim of the invention will be assembled.
- Figure-4: is the two dimensional side view of the trim of the invention at the moment of assembly to the sealing member.
- Figure-5: is the two dimensional side view of the trim of the invention assembled to the sealing member.
- Figure-6: is the two dimensional side view of the trim of the prior art.

### Reference Numbers

- **A.**: Oval structure
- **1.**: Sealing profile embodiment
- **10.**: Trim
- **11.**: Oval Connector
- **111.**: First connection surface
- **112.**: Second connection surface
- **12.**: Trim base
- **13.**: Hook bolt
- **14.**: Flat connector
- **15.**: Additional connector
- **20.**: Sealing profile
- **21.**: Oval connection slot
- **22.**: Bolt slot
- **23.**: Connection slot
- **30.**: Fitting surface

### Detailed Explanation of a Sample of the Invention

The principle of embodiment;

The sealing profile embodiment (1) comprises the trim (10), the sealing profile (20) and the fitting surface (30). Figure-5 is a two-dimensional side view of the assembled state of this structure.

The trim (10) comprises an oval connector (11), a trim base (12) and a hook bolt (13). Figure-1, is the perspective view of the trim (10).

At the end of the oval connector (11), the first connection surface (111) and the second connection surface (112) are located. The first connection surface (111) and the second connection surface (112) provide ease of assembly to the oval connection slot (21) located on the sealing profile (20). Figure-2, is the two dimensional side view of the trim (10).

Said trim (10) is used in a sealing profile (20) to prevent foreign substances such as water, dust etc. from entering the vehicle. The sealing profile (20) is attached to the fitting surface (30) which is formed in the part where the glass is attached to the door. Figure-3, is the two dimensional side view of the sealing profile (20) assembled on the fitting surface (30).

On the sealing profile (20) there is a bolt slot (22) to secure the mounting of the trim (10). The hook bolt (13) on the trim (10) is passed through the bolt slot (22).

### The mounting principle;

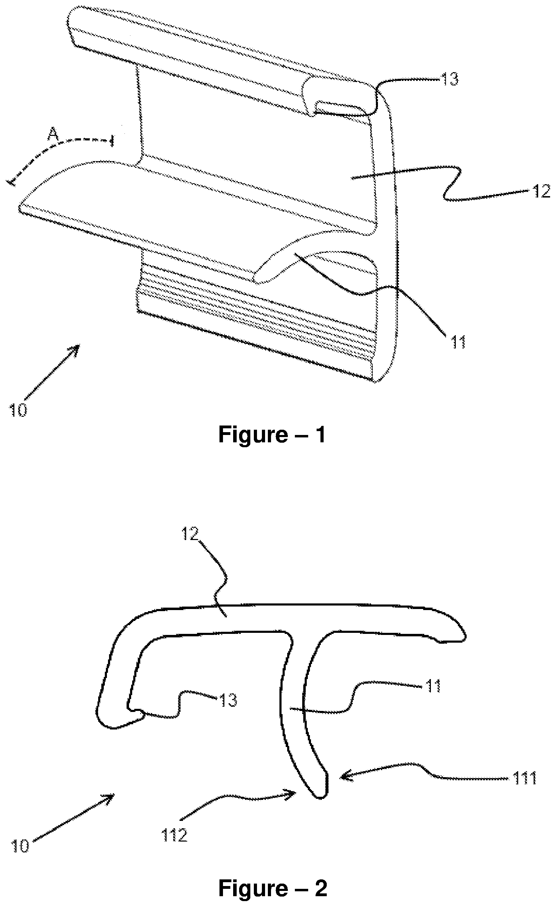

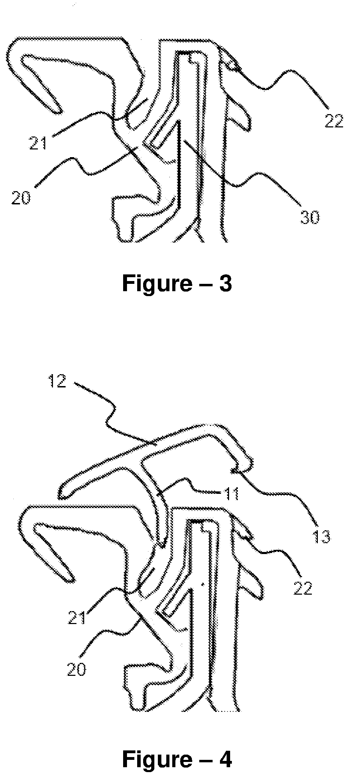

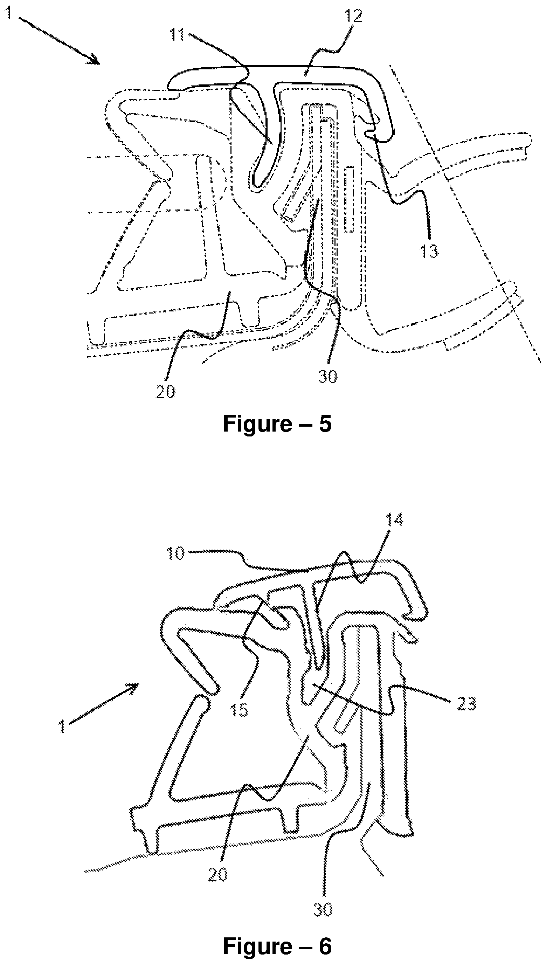

In the glass-mounted parts of the vehicle doors, sealing profiles (1) are formed to prevent the entrance of water or dust from the outside. Sealing profiles (1) in the sealing profile structure (20) are assembled to the fitting surface (30) on the door. Figure 3 illustrates this assembly.

Thereafter, the trim (10) of the invention is fitted to the sealing profile (20). For this process, the oval connector (11) is first placed in the oval connection slot (21). Due to the oval structure (A) of the oval connector (11), the connector is connected to the fitting gap with a more stable/compatible structure. At the end of the oval connector (11), wide-framed first connection surface (111) and the second connection surface (112) strengthen the connection further. Figure 4, is a two-dimensional view of the passing of the oval connector (11) into the oval connection slot (21), at first.

Then, pressure is applied to the end portion of the trim (10) where the hook bolt (13) is placed and the hook bolt (13) is passed through the bolt slot (22). Due to this pressure, the hook bolt (13) passes/attaches to the corresponding bolt slot (22) found in the sealing profile (20) and consequently the trim (10) is assembled. Figure-5, is the two dimensional side view of the trim (10) assembled.

The trim (10) of the invention is usually made of metal or metal-alloy materials.

Figure-6, is the two dimensional side view of the trim (10) of the prior art mounted to the sealing profile (20). As shown in the figure, flat connector (14) and additional connector (15) are used to attach the trim (10) to the sealing profile (20). The flat connector (14) is placed in the connection slot (23). The incompatibility of the connection slot (23) with the said flat connector (14) causes the problems described in the prior art section.

Furthermore, the additional connector (15) placed on the trim (10) used in the prior art makes the assembly difficult.

The solid/coherent structure desired to be provided with the additional connector (15) in the prior art is provided by the first connection surface (111) and the second connection surface (112) formed at the ends of the oval connector (11) of the invention.

## Claims

1. A sealing profile embodiment (1) comprising a sealing profile (20) placed between the vehicle door and the glass to prevent water and dust from entering the vehicle; a fixing surface (30) formed on the door to provide ease of assembly of said sealing profile (20) to the vehicle door; a trim (10) placed on the sealing profile (20) to form aesthetic appearance and a durable structure; a trim base (12) forming the main body of said trim(10) and covering the sealing profile (20), **characterized in** comprising
• an oval connector (11) which is formed as a leg in the middle of said trim base (12), in an oval structure (A) perpendicular to the trim base (12) to ensure that the trim (10) is fully fitted in the sealing profile (20),
• an oval connection slot (21) on the sealing profile (20) where the oval connector (11) will be placed in accordance with the oval structure (A) of the oval connector (11),
a bolt slot (22) on the sealing profile (20) to secure the mounting of the trim (10),
a hook bolt (13) on the trim (10) which is placed in the bolt slot (22) so that the sealing profile (20) and the trim (10) are assembled,
the hook bolt (13) and the curvature of the oval connector (11) being oriented in the same direction for ease of assembly.

2. A sealing profile structure (1) according to Claim 1, **characterized in** comprising a first connection surface (111) and a second connection surface (112) which provide a compatible connection when said oval connector (11) is inserted into the oval connection slot (21).

## Patentansprüche

1. Dichtungsprofilausführung (1), umfassend ein Dichtungsprofil (20), das zwischen der Fahrzeugtür und der Scheibe angeordnet ist, um ein Eindringen von Wasser und Staub in das Fahrzeug zu verhindern; eine Befestigungsoberfläche (30), die an der Tür ausgebildet ist, um eine einfache Montage des Dichtungsprofils (20) an der Fahrzeugtür bereitzustellen; eine Verkleidung (10), die auf dem Dichtungsprofil (20) angeordnet ist, um ein ästhetisches Erscheinungsbild und eine dauerhafte Struktur zu bilden; eine Verkleidungsbasis (12), die den Hauptkörper der Verkleidung (10) bildet und das Dichtungsprofil (20) abdeckt, **dadurch gekennzeichnet, dass** sie Folgendes umfasst:
• einen ovalen Verbinder (11), der als ein Schenkel in der Mitte der Verkleidungsbasis (12) gebildet ist,
in einer ovalen Struktur (A) senkrecht zu der Verkleidungsbasis (12), um sicherzustellen, dass die Verkleidung (10) vollständig in dem Dichtungsprofil (20) eingebaut ist,
• einen ovalen Verbindungsschlitz (21) an dem Dichtungsprofil (20), in dem der ovale Verbinder (11) entsprechend der ovalen Struktur (A) des ovalen Verbinders (11) angeordnet wird, einen Bolzenschlitz (22) an dem Dichtungsprofil (20), um die Halterung der Verkleidung (10) zu fixieren,
einen Hakenbolzen (13) an der Verkleidung (10), der in dem Bolzenschlitz (22) angeordnet wird, so dass das Dichtungsprofil (20) und die Verkleidung (10) montiert werden,
wobei der Hakenbolzen (13) und die Krümmung des ovalen Verbinders (11) zur einfachen Montage in die gleiche Richtung ausgerichtet sind.

2. Dichtungsprofilstruktur (1) nach Anspruch 1, **dadurch gekennzeichnet, dass** sie eine erste Verbindungsoberfläche (111) und eine zweite Verbindungsoberfläche (112) umfasst, die eine kompatible Verbindung bereitstellen, wenn der ovale Verbinder (11) in den ovalen Verbindungsschlitz (21) eingesetzt ist.

## Revendications

1. Mode de réalisation de profil d'étanchéité (1) comprenant un profil d'étanchéité (20) placé entre la porte de véhicule et la vitre pour empêcher l'eau et la poussière de pénétrer dans le véhicule ; une surface de fixation (30) formée sur la porte pour faciliter l'assemblage dudit profil d'étanchéité (20) à la porte du véhicule ; une garniture (10) placée sur le profil d'étanchéité (20) pour former un aspect esthétique et une structure durable ; une base (12) de garniture formant le corps principal de ladite garniture (10) et recouvrant le profil d'étanchéité (20), caractérisé en comprenant
• un connecteur ovale (11) qui est formé sous la forme d'une patte au milieu de ladite base (12) de garniture,
dans une structure ovale (A) perpendiculaire à la base (12) pour assurer que la garniture (10) est entièrement ajustée dans le profilé d'étanchéité (20),
• une fente de liaison ovale (21) sur le profilé d'étanchéité (20) où le connecteur ovale (11) sera placé conformément à la structure ovale (A) du connecteur ovale (11),
une fente à pêne (22) sur le profilé d'étanchéité (20) pour sécuriser le montage de la garniture (10), un pêne à crochet (13) sur la garniture (10) qui est placé dans la fente à pêne (22) de manière à ce que le profilé d'étanchéité (20) et la garniture (10) soient assemblés,
le pêne à crochet (13) et la courbure du connecteur ovale (11) étant orientés dans le même sens pour faciliter l'assemblage.

2. Structure de profil d'étanchéité (1) selon la revendication 1, **caractérisée** en comprenant une première surface de liaison (111) et une seconde surface de liaison (112) qui fournissent une liaison compatible lorsque ledit connecteur ovale (11) est inséré dans la fente de liaison ovale (21).
